# EUROPÄISCHE PATENTANMELDUNG

(11) **EP 2 433 776 A1**
(43) Veröffentlichungstag der Anmeldung: **28.03.2012**
(21) Anmeldenummer: 10015625.6
(22) Anmeldetag: 14.12.2010
(51) Int. Cl.: B29C 45/73, B29C 33/04

(54) **Verfahren zum Temperieren eines Formwerkzeugs**

(30) Priorität: 28.09.2010 DE 102010046736
(71) Anmelder: Linde AG, 80331 München (DE); ISK GmbH, 58638 Iserlohn (DE)
(72) Erfinder: Praller, Andreas, 82110 Germering (DE); Orsén, Mikael, 23136 Trelleborg (SE); Kürten, Andreas, 58644 Iserlohn (DE); Hauner, Matthias, 38165 Lehre (DE)
(74) Vertreter: Gellner, Bernd

(57) **Zusammenfassung**

Die Erfindung betrifft ein Verfahren zum Temperieren eines Formwerkzeugs (16) sowie ein Formwerkzeug (16), wobei ein erster Strom (22) eines Temperiermediums durch einen ersten in dem Formwerkzeug (16) befindlichen Temperierkanal (14) geleitet wird, um einen ersten Bereich (19, 20) des Formwerkzeugs (16) zu temperieren, und wobei ein zweiter Strom (23) eines Temperiermediums durch einen zweiten in dem Formwerkzeug (16) befindlichen Temperierkanal (23) geleitet wird, um einen zweiten Bereich (20, 21) des Formwerkzeugs (16) zu temperieren. Der erste und der zweite Bereich (19, 20, 21) überlappen zumindest teilweise und die Strömungsrichtungen des an den überlappenden Bereich (20) angrenzenden ersten Stroms (22) und des an den überlappenden Bereich (20) angrenzenden zweiten Stroms (23) schließen miteinander einen Winkel von mehr als 90° ein.

## Beschreibung

Die Erfindung betrifft ein Verfahren zum Temperieren eines Formwerkzeugs, wobei ein erster Strom eines Temperiermediums durch einen ersten in dem Formwerkzeug befindlichen Temperierkanal geleitet wird, um einen ersten Bereich des Formwerkzeugs zu temperieren, und wobei ein zweiter Strom eines Temperiermediums durch einen zweiten in dem Formwerkzeug befindlichen Temperierkanal geleitet wird, um einen zweiten Bereich des Formwerkzeugs zu temperieren.

Ferner bezieht sich die Erfindung auf ein Formwerkzeug mit einem ersten in dem Formwerkzeug befindlichen Temperierkanal zur Durchleitung eines Temperiermediums, um einen ersten Bereich des Formwerkzeugs zu temperieren, wobei der erste Bereich durch die Teile des Formwerkzeugs gebildet wird, die einen Abstand von weniger als 25 mm, bevorzugt weniger als 20 mm, besonders bevorzugt weniger als 10 mm, ganz besonders bevorzugt weniger als 5 mm, von dem ersten Temperierkanal aufweisen, und mit einem zweiten in dem Formwerkzeug befindlichen Temperierkanal zur Durchleitung eines Temperiermediums, um einen zweiten Bereich des Formwerkzeugs zu temperieren, wobei der zweite Bereich durch die Teile des Formwerkzeugs gebildet wird, die einen Abstand von weniger als 25 mm, bevorzugt weniger als 20 mm, besonders bevorzugt weniger als 10 mm, ganz besonders bevorzugt weniger als 5 mm, von dem zweiten Temperierkanal aufweisen, wobei der erste und der zweite Temperierkanal jeweils einen Einlass und einen Auslass aufweisen und wobei der Einlass jeweils mit einer Quelle für ein Temperiermedium verbunden ist, wobei die Verbindung von dem Einlass zu dem Auslass eines Temperierkanals jeweils die Strömungsrichtung durch den Temperierkanal bestimmt.

Beim Spritzgießen ist eine gleichmäßige Temperaturverteilung auf der Oberfläche des Formwerkzeugs ein entscheidender Faktor für gute Qualität und kurze Kühlzeiten. In der Regel wird die Temperatur eines Formwerkzeugs für die thermoplastische Verarbeitung mit Hilfe von Wasser oder Öl geregelt, die durch entsprechende Temperierkanäle in dem Formwerkzeug geleitet werden.

Die Temperaturverteilung im Formwerkzeug hängt von der Lage und Beabstandung der einzelnen Temperierkanäle untereinander und deren Abstand zur Oberfläche des Formwerkzeugs ab. Zur Temperierung langer und dünner Bereiche des Formwerkzeugs müssen Temperierkanäle mit entsprechend geringen Durchmessern verwendet werden. Der Durchsatz an Wasser oder Öl als Temperiermedium wird aber durch die geringen Kanaldurchmesser deutlich begrenzt, so dass auch die Kühl- bzw. Temperierwirkung reduziert wird. Dies hat erhebliche Kühl- bzw. Zykluszeitverlängerungen und/oder Qualitätseinbußen an den hergestellten Erzeugnissen zur Folge.

Aus der DE 199 18 428 C1 ist bereits ein Verfahren zum Kühlen von Formwerkzeugen mittels Kohlendioxid bekannt. Hierbei wird üiber ein Zuleitungssystem unter Druck befindliches Kohlendioxid in dafür vorgesehene Werkzeugbereiche geleitet, um diese Bereiche durch eine gezielte Expansion des Kohlendioxids zu kühlen. Für die Abführung des Gases werden Temperierkanäle mit nur geringem Querschnitt benötigt. Dadurch konnen auch Bereiche im Formwerkzeug gekühlt werden, in denen eine Wasser- oder Ölkühlung technisch und wirtschaftlich vorher nicht sinnvoll möglich war.

Bei der Entspannung des flüssigen Kohlendioxids entsteht lokal eine große Kälte, die zu einer ungleichmäßigen Kühlung des Formwerkzeugs führt. Bereiche des Formwerkzeugs, welche direkt nach der Entspannungsstelle liegen, werden stärker gekühlt als Bereiche, die weiter weg von der Entspannungsstelle liegen.

Aufgabe vorliegender Erfindung ist es daher, ein Verfahren und ein Formwerkzeug aufzuzeigen, welche eine gleichmäßige Temperierung des Formwerkzeugs erlauben.

Diese Aufgabe wird durch ein Verfahren zum Temperieren eines Formwerkzeugs gelöst, wobei ein erster Strom eines Temperiermediums durch einen ersten in dem Formwerkzeug befindlichen Temperierkanal geleitet wird, um einen ersten Bereich des Formwerkzeugs zu temperieren, und wobei ein zweiter Strom eines Temperiermediums durch einen zweiten in dem Formwerkzeug befindlichen Temperierkanal geleitet wird, um einen zweiten Bereich des Formwerkzeugs zu temperieren, und welches dadurch gekennzeichnet ist, dass der erste und der zweite Bereich zumindest teilweise überlappen und dass die Strömungsrichtungen des an den überlappenden Bereich angrenzenden ersten Stroms und des an den überlappenden Bereich angrenzenden zweiten Stroms in dem überlappenden Bereich einen Winkel von mehr als 90° miteinander einschließen.

Das erfindungsgemäße Formwerkzeug besitzt einen ersten in dem Formwerkzeug befindlichen Temperierkanal zur Durchleitung eines Temperiermediums, um einen ersten Bereich des Formwerkzeugs zu temperieren, wobei der erste Bereich durch die Teile des Formwerkzeugs gebildet wird, die einen Abstand von weniger als 25 mm, bevorzugt weniger als 20 mm, besonders bevorzugt weniger als 10 mm, ganz besonders bevorzugt weniger als 5 mm, von dem ersten Temperierkanal aufweisen, und einen zweiten in dem Formwerkzeug befindlichen Temperierkanal zur Durchleitung eines Temperiermediums, um einen zweiten Bereich des Formwerkzeugs zu temperieren, wobei der zweite Bereich durch die Teile des Formwerkzeugs gebildet wird, die einen Abstand von weniger als 25 mm, bevorzugt weniger als 20 mm, besonders bevorzugt weniger als 10 mm, ganz besonders bevorzugt weniger als 5 mm, von dem zweiten Temperierkanal aufweisen, wobei der erste und der zweite Temperierkanal jeweils einen Einlass und einen Auslass aufweisen und wobei der Einlass jeweils mit einer Quelle für ein Temperiermedium verbunden ist, wobei die Verbindung von dem Einlass zu dem Auslass eines Temperierkanals jeweils die Strömungsrichtung durch den Temperierkanal bestimmt. Das erfindungsgemäße Formwerkzeug ist dadurch gekennzeichnet, dass der erste und der zweite Bereich zumindest teilweise überlappen und dass die Strömungsrichtung durch den an den überlappenden Bereich angrenzenden ersten Temperierkanal und die Strömungsrichtung durch den an den überlappenden Bereich angrenzenden zweiten Temperierkanal in dem überlappenden Bereich einen Winkel von mehr als 90° miteinander einschließen.

Der Begriff "Formwerkzeug" wird im Rahmen dieser Anmeldung für ein Spritzgusswerkzeug verwendet, welches eine zur Herstellung eines Kunststoff- oder Metallteils geeignete Kavität aufweist. Das Werkzeug dient beispielsweise zur Herstellung großer Stückzahlen von Kunststoffteilen. Flüssiger Kunststoff wird hierzu in das Werkzeug mit hohem Druck eingespritzt, das Kunststoffteil kühlt ab und wird nach einer gewissen Zeit aus dem Werkzeug ausgestoßen.

In der Regel besteht das Formwerkzeug aus zwei oder mehr Werkzeugteilen, die voneinander getrennt oder relativ zueinander bewegt werden können, um das Werkzeug zu öffnen und zu schließen. Die Erfindung betrifft die Temperierung eines oder mehrerer der genannten Werkzeugteile, des gesamten Formwerkzeugs oder bestimmter Teile oder Bereiche des Formwerkzeugs.

Unter dem Begriff "Temperieren" wird eine Herabsetzung, Erhöhung oder auch ein Halten der Temperatur des Formwerkzeugs oder eines Teils des Formwerkzeugs verstanden. Die Erfindung dient insbesondere zum Kühlen oder zum Erwärmen eines Teils des Formwerkzeugs.

Der Begriff "Temperiermedium" soll gasförmige, flüssige und feste Medien sowie Gemische aus solchen umfassen. Insbesondere werden gasförmige oder flüssige Stoffe oder Gemische aus gasförmigen und festen Stoffen als Temperiermedium verwendet.

Bevorzugtes Temperiermedium ist Kohlendioxid. Zum Kühlen wird das Kohlendioxid bevorzugt in flüssiger Form in das Formwerkzeug geleitet und in einen Temperierkanal hinein oder innerhalb eines Temperierkanals entspannt. Bei der Entspannung des flüssigen Kohlendioxids entsteht ein Gemisch aus Kohlendioxidgas und festen Kohlendioxidschneepartikeln. Dieses Gemisch wird durch den Temperierkanal geleitet und kühlt dabei die an den Temperierkanal angrenzenden Bereiche des Formwerkzeugs ab. Zum Erwärmen des Formwerkzeugs oder eines Teils des Formwerkzeugs wird vorzugsweise gasförmiges Kohlendioxid eingesetzt, welches vor dem Einleiten in den Temperierkanal erhitzt wurde.

Erfindungsgemäß sind in dem Formwerkzeug mindestens zwei Temperierkanäle vorgesehen. Durch den ersten Temperierkanal wird ein erster Strom eines Temperiermediums geleitet, durch den zweiten Temperierkanal ein zweiter Strom eines Temperiermediums. Das durch den Temperierkanal strömende Temperiermedium tauscht mit den an den Temperierkanal angrenzenden Zonen des Formwerkzeugs Wärme aus. Alle durch den ersten Strom eines Temperiermediums temperierten Zonen bilden einen ersten temperierten Bereich, alle durch den zweiten Strom eines Temperiermediums temperierten Zonen bilden einen zweiten temperierten Bereich.

Während das Temperiermedium den Temperierkanal durchströmt, tauschen das Temperiermedium und das Formwerkzeug Wärme aus und deren Temperatur nähert sich aneinander an. Die Temperierwirkung, das heißt die durch das Temperiermedium bewirkte Temperaturänderung des von dem Temperierkanal durchzogenen Bereichs des Formwerkzeugs, fällt aufgrund der sinkenden Temperaturdifferenz mit wachsender Entfernung vom Einlass des Temperierkanals ab. Das bedeutet, dass beispielsweise beim Kühlen die Bereiche des Formwerkzeugs, die sich im stromaufwärtigen Teil des Temperierkanals befinden, stärker gekühlt werden als die stromabwärtigen Bereiche.

Erfindungsgemäß sind mindestens zwei Temperierkanäle vorgesehen, die jeweils einen ersten und einen zweiten Bereich temperieren. Der erste und der zweite Bereich sollen zumindest teilweise überlappen. Der durch den Überlapp des ersten und des zweiten Bereichs gebildete Überlappbereich wird sowohl durch den ersten Strom des Temperiermediums als auch durch den zweiten Strom des Temperiermediums temperiert.

Erfindungsgemäß schließen die Strömungsrichtungen des ersten Stroms und des zweiten Stroms, welche den überlappenden Bereich temperieren, einen Winkel von mehr als 90° miteinander ein. Der erste und der zweite Strom verlaufen in dem Überlappbereich nicht in dieselbe Richtung, sondern besitzen jeweils eine Bewegungskomponente in zueinander entgegengesetzten Richtungen. Mit anderen Worten: Die Vektoren der Strömungsrichtungen des ersten und des zweiten Stroms bilden miteinander einen stumpfen Winkel, von Vorteil sind die Vektoren antiparallel ausgerichtet, d.h. sie schließen einen Winkel von 180° miteinander ein.

Die erfindungsgemäße Ausrichtung der Ströme hat folgenden Vorteil: Der erste Strom des Temperiermediums temperiert eine stromabwärts einer ersten, stromaufwärtigen Stelle gelegene zweite, stromabwärtige Stelle schwächer als die erste Stelle, da sich die Temperaturen des Temperiermediums und des Formwerkzeugs während des Strömens von der ersten Stelle zu der zweiten Stelle aneinander angenähert haben. Entsprechendes gilt für den zweiten Strom des Temperiermediums. Durch die erfindungsgemäße Ausrichtung der Ströme wird nun die von dem ersten Strom weniger temperierte zweite Stelle durch den zweiten Strom stärker temperiert und umgekehrt. Insgesamt wird auf diese Weise eine gleichmäßigere Temperierung des Formwerkzeugs erreicht.

Dies soll am Beispiel zweier entgegengesetzt durchströmter Temperierkanäle, durch die jeweils ein Kühlmedium strömt, noch einmal verdeutlicht werden. Der erste Strom des Kühlmediums verläuft beispielsweise von links nach rechts und kühlt dabei den linken Teil des Formwerkzeugs stärker ab als den Rechten. Der zweite Strom des Kühlmediums wird in entgegengesetzter Richtung, d.h. von rechts nach links, durch das Formwerkzeug geleitet, wobei beide Ströme denselben Bereich des Formwerkzeugs kühlen sollen. Der zweite Strom kühlt damit den rechten Teil des Formwerkzeugs stärker als den linken Teil. Der durch den einen Kühlmediumstrom weniger gekühlte Teil wird auf diese Weise durch den anderen Kühlmediumstrom stärker gekühlt und umgekehrt, so dass insgesamt eine gleichmäßige Kühlung erzielt wird.

Die Temperierwirkung des durch einen Temperierkanals strömenden Temperiermediums nimmt mit dem Abstand von dem Temperierkanal ab. Es hat sich gezeigt, dass die Bereiche des Formwerkzeugs, die einen Abstand von weniger als 25 mm vom Rand des Temperierkanals besitzen, von der Temperierwirkung ausreichend stark erfasst werden. Von Vorteil werden daher der erste bzw. der zweite Bereich durch die Teile des Formwerkzeugs gebildet, die einen Abstand von weniger als 25 mm, bevorzugt weniger als 20 mm, besonders bevorzugt weniger als 10 mm, ganz besonders bevorzugt weniger als 5 mm, von dem Rand des jeweiligen Temperierkanals aufweisen.

Der erste und der zweite Temperierkanal sind daher zumindest streckenweise weniger als 50 mm, bevorzugt weniger als 40 mm, bevorzugt weniger als 20 mm, bevorzugt weniger als 10 mm voneinander entfernt. Bei einer solchen Beabstandung der beiden Temperierkanäle überlappen die von den durch die Temperierkanäle strömenden Temperiermedien temperierten Bereiche und die erfindungsgemäße Wirkung einer gleichmäßigeren Temperierung des Formwerkzeugs kommt besonders zum Tragen.

Von Vorteil überlappen der erste und der zweite Bereich zu mehr als 50%. Je größer der überlappende Bereich ist, desto gleichmäßiger wird das Formwerkzeug temperiert. In Teilen des Formwerkzeugs, welche besonders gleichmäßig temperiert werden sollen, werden von Vorteil die Temperierkanäle so angeordnet, dass der erste und der zweite Bereich möglichst stark, wenn möglich sogar komplett, übereinstimmen, beispielsweise indem die beiden Temperierkanäle sehr dicht nebeneinander angeordnet werden. Sollen andererseits bestimmte Teile des Formwerkzeugs stärker temperiert werden als andere, kann es durchaus auch sinnvoll sein, in diesen Teilen des Formwerkzeugs die erfindungsgemäße Anordnung der Temperierkanäle nicht vorzusehen.

Es hat sich gezeigt, dass das erfindungsgemäße Verfahren eine gleichmäßige Temperierung des Formwerkzeugs bei Temperaturänderungen von bis zu 50 K/s ermöglicht. Unter einer gleichmäßigen Temperierung soll die Einstellung einer möglichst gleichen Temperatur der Formwerkzeugoberfläche verstanden werden. Die maximale Temperaturdifferenz auf dem Teil der Formwerkzeugoberfläche, der gleichmäßig temperiert werden soll, beträgt vorzugsweise weniger als 40 K, besonders bevorzugt weniger als 10 K.

Die Erfindung dient insbesondere zum Kühlen und Erwärmen von Formwerkzeugen zur Kunststoffverarbeitung, insbesondere zum Kühlen und Erwärmen von Spritzgusswerkzeugen, Formen zum Spritzgießen oder Teilen derselben. Von Vorteil wird das Formwerkzeug oder dessen Oberfläche hierbei mittels des erfindungsgemäßen Verfahrens auf eine Temperatur von bis zu 250 °C, in manchen Fällen (abhängig vom Kunststoff und der Aufgabenstellung) bis zu 350 °C, in Ausnahmefällen bis zu 400 °C, erwärmt und/oder auf eine Temperatur von - abhängig vom Kunststoff - 20 °C bis 100 °C abgekühlt.

Soll ein Formwerkzeug zur Herstellung von Metallteilen erfindungsgemäß temperiert werden, so erfolgt die Erwärmung vorzugsweise auf Temperaturen zwischen 100 °C und 1000 °C, vorzugsweise auf Temperaturen zwischen 200 °C und 800 °C, und die Abkühlung auf bis zu 200 °C, vorzugsweise bis zu 100 °C.

Die Erfindung wird bevorzugt zur variothermen Temperierung von Formwerkzeugen eingesetzt. Das Formwerkzeug wird dabei abwechselnd abgekühlt und erwärmt. Beim Kunststoffspritzgießen wird beispielsweise erst ein heißes Temperiermedium durch die Temperierkanäle des Formwerkzeugs geleitet oder gepumpt, um das Formwerkzeug, insbesondere die Oberfläche der Kavität des Formwerkzeugs, auf die gewünschte Temperatur zu bringen. Dann wird der Einspritzvorgang gestartet und Kunststoffschmelze in die Kavität eingespritzt. Nach einer vorgegebenen Zeitspanne erfolgt die Kühlung des Formwerkzeugs. Hierzu wird ein kaltes Temperiermedium durch die Temperierkanäle geleitet.

Ein wesentliches Anwendungsgebiet der Erfindung ist die Verarbeitung von thermoplastischen Kunststoffen, wobei während des Einspritzens der Kunststoffschmelze in das Formwerkzeug bzw. in die Form die Werkzeugtemperatur erhöht und nach dem Füllen der Form die Temperatur möglichst schnell abgesenkt werden soll.

Auch bei der Verarbeitung von Duroplasten und anderen vernetzenden Kunststoffen ist das erfindungsgemäße Verfahren vorteilhaft einsetzbar. Bei der Herstellung von Formteilen aus Duroplasten oder vernetzenden Kunststoffen ist die Vermeidung von Graten von besonderer Bedeutung. Solche Grate entstehen aufgrund der geringen Viskosität der vernetzenden Kunststoffmaterialien während der Füll- und Kompressionsphase.

Vorzugsweise werden daher die bei der Verarbeitung der vernetzenden Kunststoffe eingesetzten Formwerkzeuge oder Formen zeitweise beheizt. Bestehen die Formwerkzeuge aus zwei oder mehr Werkzeugteilen, in die das Kunststoffmaterial eingebracht wird und die dann zusammengepresst werden, so wird vorzugsweise der Bereich der Kontaktstellen der einzelnen Formwerkzeugteile erfindungsgemäß beheizt, um dort kurzzeitig ein höheres Temperaturniveau einzustellen und so die Viskosität der Kunststoffmasse zu erhöhen und die Vernetzungsreaktion zu beschleunigen.

Es kann auch günstig sein, während einer Temperierungsphase, das heißt während eines Kühl- oder Aufheizvorgangs, die Strömungsrichtungen des ersten und des zweiten Stroms umzukehren. Zunächst wird der erste Strom eines Temperiermediums in eine bestimmte Richtung durch den ersten Temperierkanal geleitet. Die Strömungsrichtung des zweiten Stroms wird erfindungsgemäß so gewählt, dass die Strömungsrichtungen des ersten Stroms und des zweiten Stroms in dem Bereich, der von beiden Strömen temperiert wird, einen Winkel von mehr als 90° miteinander einschließen. Nach einer bestimmten Zeit wird die Strömungsrichtung des ersten Stroms umgekehrt. Entsprechend wird auch die Strömungsrichtung des zweiten Stroms umgekehrt, so dass dann beide Ströme in entgegengesetzten Richtungen durch die jeweiligen Temperierkanäle fließen. Diese Richtungsumkehr bewirkt eine weitere Vergleichmäßigung der Temperatur des Formwerkzeugs bzw. von dessen Oberfläche.

Der Wechsel der Strömungsrichtung kann, wie oben beschrieben, während einer Abkühlphase oder während einer Aufheizphase erfolgen. Es hat sich ferner als günstig erwiesen, beim Wechsel von Abkühlung des Formwerkzeugs zu Erwärmung des Formwerkzeugs bzw. eines Teils desselben die Strömungsrichtungen des ersten und des zweiten Stroms umzukehren. Das heißt, zum Abkühlen des Formwerkzeugs wird das Temperiermedium in einer Richtung durch den Temperierkanal geleitet, zum Aufheizen oder Anwärmen des Formwerkzeugs in die entgegengesetzte Richtung.

Es ist auch möglich, die genannten Richtungswechsel der Ströme zu kombinieren. Das heißt, während einer Anwärmphase wird die Strömungsrichtung ein- oder mehrfach gewechselt. Bei der folgenden Abkühlphase wird die Strömungsrichtung des Temperiermediums bezogen auf die Strömungsrichtung des letzten Anwärmvorgangs wiederum gewechselt. Während der Abkühlphase sind dann ebenfalls ein oder mehrere Wechsel der Strömungsrichtung möglich.

Vorzugsweise wird das Formwerkzeug während der Kühlphase und während der Heizphase mit dem gleichen Temperiermedium mit unterschiedlichen Temperaturen gekühlt bzw. beheizt. Auf diese Weise wird ein schnelles Umschalten von Kühlung auf Heizung des Formwerkzeugs möglich. So wird beispielsweise eine Form zur Kunststoffverarbeitung kurz vor und/oder während des Einbringens von Kunststoffschmelze durch heißes gasförmiges Kohlendioxid beheizt. Sobald die Form gefüllt ist, wird auf Kühlung umgeschaltet. Dazu muss lediglich kaltes, vorzugsweise flüssiges Kohlendioxid denselben Temperierkanälen zugeführt werden. In den Temperierkanälen noch befindliches warmes Kohlendioxidgas wird dabei durch das zugeführte kalte Kohlendioxid verdrängt.

Bei der variothermen Temperierung werden das Kühlmedium und das Heizmedium bevorzugt durch dieselben Temperierkanäle geleitet. Das Heizmedium strömt während der Heizphase durch dieselben Temperierkanäle, durch die das Kühlmedium während der Kühlphase strömt.

Die Erfindung eignet sich insbesondere zur Temperierung von Formwerkzeugen, die bei der Herstellung von Kunststoff- oder Metallteilen eingesetzt werden.

In einer bevorzugten Ausführungsform der Erfindung besitzen die Temperierkanäle eine maximale Querschnittsweite zwischen 0,5 mm und 5 mm, vorzugsweise zwischen 0,7 mm und 2 mm. Der Querschnitt der Temperierkanäle wird bevorzugt rechteckförmig, rund oder elliptisch gewählt.

Die vorstehenden Ausführungen sind nicht auf ein Formwerkzeug mit genau zwei Temperierkanälen beschränkt. Es ist durchaus möglich, und häufig sinnvoll, mehrere Temperierkanäle vorzusehen, welche zum Teil dieselben Bereiche des Formwerkzeugs temperieren, zum Teil unterschiedliche Bereiche. So kann ein bestimmter Bereich des Formwerkzeugs beispielsweise durch drei oder vier Temperierungsströme temperiert werden, um eine noch gleichmäßigere Einstellung der Formwerkzeugtemperatur zu erreichen.

Die Anordnung und Ausführung der Temperierkanäle hängt wesentlich von der Art und Form des Formwerkzeugs ab. In einer einfachen Ausführungsform verlaufen der erste und der zweite Temperierkanal und gegebenenfalls noch weitere Temperierkanäle geradlinig und parallel zueinander.

Der erste Temperierkanal kann auch spiralförmig in einer Ebene verlaufen, wobei der zweite Temperierkanal ebenfalls spiralförmig in derselben Ebene in den Zwischenräumen des ersten Temperierkanals angeordnet ist, so dass die beiden Temperierkanäle im Wesentlichen parallel zueinander verlaufen. Die Beschickung der beiden Temperierkanäle erfolgt dann von entgegengesetzten Seiten. Die Spiralen können zum Beispiel vom archimedischen Typ sein oder auch als rechtwinklige Spiralen ausgeführt sein.

Die Temperierkanäle können auch, zumindest streckenweise, in Form einer zwei- oder mehrgängigen Schraube angeordnet sein. Weitere vorteilhafte Anordnungen der Temperierkanäle sind wellenförmige oder mäanderförmige Ausführungen, sowohl solche, die sich in einer Ebene erstrecken, als auch solche, die sich in drei Dimensionen ausdehnen.

Vorzugsweise wird das Formwerkzeug mit einem technischen Gas, bevorzugt mit einem inerten Gas, besonders bevorzugt mit Kohlendioxid, ganz besonders bevorzugt mit flüssigem Kohlendioxid, gekühlt. Weitere technische Gase, die erfindungsgemäß mit Vorteil eingesetzt werden können, sind Argon, Stickstoff oder Helium. Diese Gase haben den Vorteil, umweltverträglich, ungiftig und unbrennbar zu sein.

Grundsätzlich können aber auch andere Wärme- bzw. Kälteträger zur erfindungsgemäßen Werkzeugtemperierung genutzt werden. Hierzu gehören beispielsweise Ammoniak, N₂O, FCKW, teilhalogenierte oder teilfluorierte Kohlenwasserstoffe, wie R134a, Chlorkohlenwasserstoffe oder halogenfreie Kohlenwasserstoffe. Im Rahmen der vorliegenden Erfindung haben sich jedoch technische Gase und hierunter vor allem Kohlendioxid als geeignetste Kühl- bzw. Heizmedien erwiesen. Insbesondere mit flüssigem Kohlendioxid werden sehr hohe Abkühlgeschwindigkeiten erzielt.

Wie erwähnt, erfolgt die Temperierung des Formwerkzeugs bzw. eines Teils des Formwerkzeugs, insbesondere eines bestimmten Bereichs der Formwerkzeugoberfläche, mit besonderem Vorteil unter Verwendung von Kohlendioxid als Temperiermedium. Zur Kühlung des Formwerkzeugs wird flüssiges Kohlendioxid vorzugsweise mittels eines Kapillarrohres zugeführt, welches zum Teil in den Temperierkanal ragt. Das Kapillarrohr besitzt einen Durchmesser, der geringer ist als der Durchmesser des Temperierkanals in diesem Abschnitt. Beim Austritt des flüssigen Kohlendioxids aus dem Kapillarrohr, d.h. beim Übergang in den Temperierkanal weitet sich somit der Leitungsquerschnitt für das flüssige Kohlendioxid auf und das flüssige Kohlendioxid erfährt eine Druckverringerung. Bei dieser Entspannung geht das flüssige Kohlendioxid in ein Gemisch aus Kohlendioxidgas und festen Kohlendioxidschneepartikeln über. Dieses Gemisch wird durch den Temperierkanal geleitet und kühlt dabei die an den Temperierkanal angrenzenden Bereiche des Formwerkzeugs ab.

Der Entspannungsvorgang kann zusätzlich unterstützt werden, indem der Temperierkanal an einer Stelle eine Querschnittserweiterung aufweist. Das Kapillarrohr ragt bei dieser Ausführungsform bis in die Querschnittserweiterung, so dass das flüssige Kohlendioxid beim Austritt aus dem Kapillarrohr einen größeren Druckverlust erleidet, wodurch das Verhältnis des gebildeten Kohlendioxidschnees zu Kohlendioxidgas beeinflusst wird. Es hat sich aber gezeigt, dass in der Regel eine solche Querschnittserweiterung nicht notwendig ist und dass der Temperierkanal daher vorzugsweise über seine gesamte Länge mit demselben Querschnitt ausgeführt wird.

Zum Heizen des Formwerkzeugs wird von Vorteil das gasförmige Kohlendioxid vor dem direkten Kontakt mit dem Formwerkzeug erwärmt. Als Heizvorrichtung zum Anwärmen des gasförmigen Kohlendioxids eignen sich insbesondere elektrisch oder mit Gas betriebene Erwärmer/Erhitzer.

Das Heizmedium, vorzugsweise gasförmiges Kohlendioxid, besitzt bevorzugt eine Temperatur zwischen 50 °C und 500 °C. Der Druck des Heizmediums wird vorteilhaft zwischen 10 bar und 400 bar gewählt. Unter diesen Bedingungen ist ein schnelles Aufwärmen des Formwerkzeugs möglich.

Zur Senkung der Betriebskosten hat es sich als günstig erwiesen, einen geschlossenen Kreislauf für das Temperiermedium, d.h. das Kühlmedium und/oder das Heizmedium, vorzusehen. Das Kühlmedium bzw. das Heizmedium werden hierbei, nachdem sie das Werkzeug durchströmt haben und dieses abgekühlt bzw. angewärmt haben, einer mehrmaligen Verwendung als Kühl- oder Heizmedium zugeführt. Ein Heizkreislauf könnte zum Beispiel so aussehen, dass heißes gasförmiges Kohlendioxid als Heizmedium dem Werkzeug zugeführt wird, dort Wärme in direktem Wärmeaustausch mit dem Werkzeug abgibt, vom Werkzeug abgezogen und wieder erwärmt wird, um dann erneut als Heizmedium zu dienen. Entsprechendes gilt für einen Kohlendioxid-Kühlkreislauf.

Wird flüssiges Kohlendioxid zum Kühlen des Werkzeugs verwendet, hat es sich auch als zweckmäßig erwiesen, das beim Kühlen des Werkzeugs verdampfende Kohlendioxid extern zu erwärmen und anschließend als Heizmedium zum Beheizen des Werkzeugs einzusetzen.

Die Erfindung bringt zahlreiche Vorteile gegenüber den bekannten Temperierverfahren. Insbesondere bei der Verwendung von CO₂ als Kühlmedium kann die Kühlung von heißen Stellen im Formwerkzeug bzw. in der Form, wie z. B. sehr dünnen Teilen oder kleinen Kerne verbessert werden. Die durch die Erfindung bewirkte ausgeglichenere Temperaturverteilung führt zu wesentlichen Qualitätssteigerungen. Eine gleichmäßige Temperaturverteilung auf der Oberfläche der Kavität ist ein entscheidender Faktor für gute Qualität und kurze Kühlzeiten beim Spritzgießen.

Die Erfindung bringt eine deutliche Reduzierung der Kühl- und Zykluszeiten, eine gleichmäßige Temperatur in dem Formwerkzeug und beim Formen, eine intensive Wärmeabfuhr in problematischen Bereichen und damit eine hochwertigere Qualität und höhere Effizienz.

Aufgrund der hohen Qualität der erfindungsgemäß erzeugten Bauteile eignet sich die Erfindung vor allem zur Herstellung folgender Bauteile aus Kunststoff:
- Dünnwandige Teile mit hohen Aspektverhältnissen, das heißt langen Fließwegen für die Kunststoffschmelze,
- Teile mit mikrostrukturierten Oberflächen,
- dickwandige Teile mit hohen Anforderungen an die Oberflächenqualität.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: ein Formwerkzeug nach dem Stand der Technik,
- Figur 2: ein Formwerkzeug mit zwei erfindungsgemäß angeordneten Temperierkanälen und
- Figur 3: eine alternative Ausführung der erfindungsgemäßen Temperierkanäle.

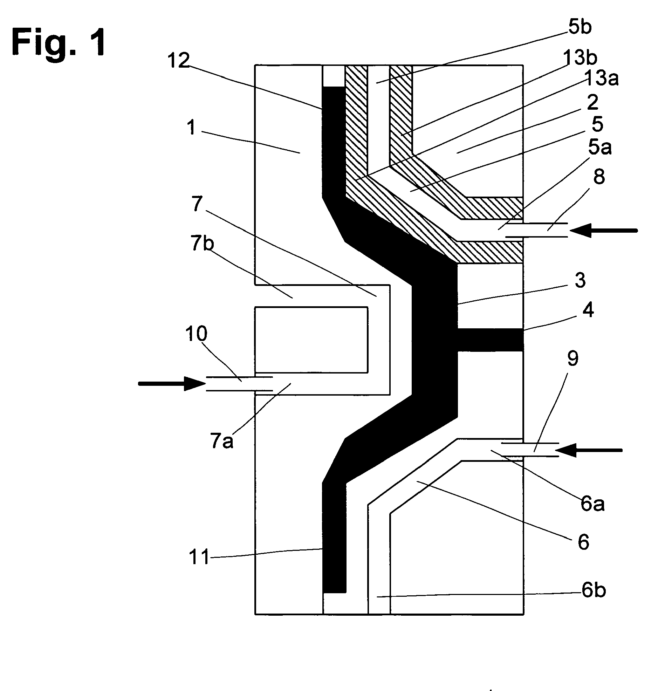

Figur 1 zeigt einen Schnitt durch ein aus dem Stand der Technik bekanntes Formwerkzeug zur Herstellung von Kunststoffteilen durch Spritzgießen. Das Formwerkzeug weist eine erste Formhälfte 1 und eine zweite Formhälfte 2 auf, die eine Kavität 3 bilden. Die Kavität 3 ist mit einer Zuleitung 4 versehen, über die eine Kunststoffschmelze in die Kavität 3 eingespritzt werden kann. Die Formhälften 1, 2 weisen außerdem Temperierkanäle 5, 6, 7 auf. In die Temperierkanäle 5, 6, 7 ragt jeweils ein Kapillarrohr 8, 9, 10, über das Kohlendioxid als Kühl- oder Heizmedium in die Temperierkanäle 5, 6, 7 eingeleitet werden kann.

Zunächst werden die Formhälften 1, 2, insbesondere deren der inneren Kavität 3 zugewandte Oberflächen, erwärmt. Hierzu wird gasförmiges Kohlendioxid mittels eines nicht dargestellten Erhitzers erhitzt und das heiße Kohlendioxidgas über die Kapillarrohre 8, 9, 10 in die Temperierkanäle 5, 6, 7 geleitet. Das Kohlendioxidgas strömt durch die Temperierkanäle 5, 6, 7 und erwärmt dabei die Formhälften 1, 2.

Anschließend wird über die Zuleitung 4 eine flüssige Kunststoffschmelze in die Kavität 3 injiziert. Über die Kapillarrohre 8, 9, 10 wird nun flüssiges Kohlendioxid unter hohem Druck von beispielsweise 60 bar zugeführt. Beim Übergang 5a, 6a, 7a aus den Kapillarrohren 8, 9, 10 in den jeweiligen Temperierkanal 5, 6, 7 erfährt das flüssige Kohlendioxid eine Druckentlastung. Bei der Expansion des CO₂ entsteht eine Mischung aus Schnee und Gas mit einer Temperatur von -79°C und einer hohen Kühlungskapazität. Das kalte Kohlendioxidgas und der Kohlendioxidschnee strömen durch die Temperierkanäle 5, 6, 7 und kühlen die Formhälften 1, 2 ab.

Am Beispiel des Temperierkanals 5 sind in Figur 1 die Bereiche 13a, 13b der Formhälfte 1, die von der Temperierwirkung des Kohlendioxids im Wesentlichen erfasst werden, schraffiert dargestellt. Nachdem das Kohlendioxid dem heißen Stahl der Formhälften 1, 2 Wärme entzogen hat, wird das dabei angewärmte und in den gasförmigen Zustand übergegangene CO₂ durch die Temperierkanäle 5, 6, 7 abgeführt. Beim Durchströmen der Temperierkanäle 5, 6, 7 erwärmt sich das Kohlendioxid, so dass die an die stromabwärtigen Enden 5b, 6b, 7b der Temperierkanäle 5, 6, 7 angrenzenden Bereiche 11, 12 der Formhälften 1, 2 weniger stark gekühlt werden und daher insgesamt nur eine ungleichmäßige Kühlung des Formwerkzeugs erreicht wird.

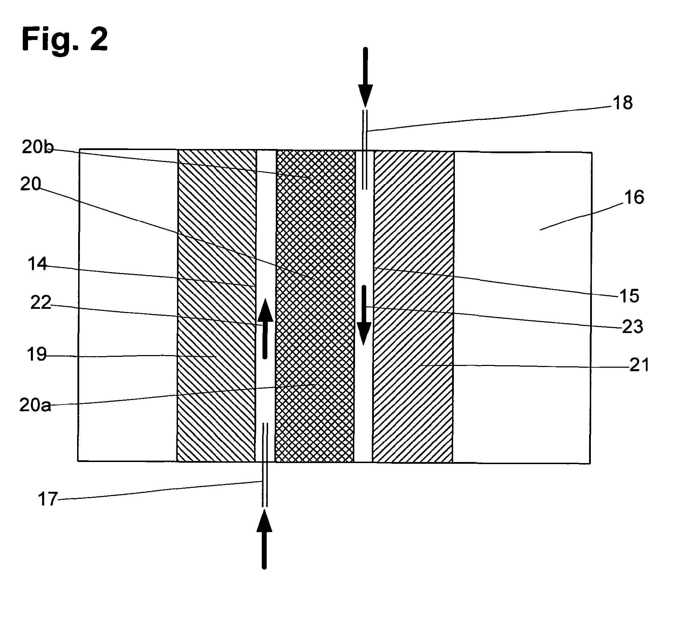

Figur 2 zeigt schematisch die erfindungsgemäße Anordnung zweier Temperierkanäle 14, 15 in einem Formwerkzeug 16. Die beiden Temperierkanäle 14, 15 sind entsprechend der in Figur 1 gezeigten Ausführung jeweils mit einem Kapillarrohr 17, 18 versehen, an das jeweils eine Zuführung für Kohlendioxid angeschlossen ist. Wird heißes Kohlendioxidgas 22 durch den Temperierkanal 14 geleitet, so werden vor allem diejenigen Bereiche 19, 20 des Formwerkstücks 16 erwärmt, die einen Abstand von weniger als 25 mm vom Rand des Temperierkanals 14 besitzen.

Zum Kühlen des Formwerkzeugs 16 wird, wie oben anhand der Figur 1 bereits ausgeführt, flüssiges Kohlendioxid in den Temperierkanal 14 entspannt, wobei sich kaltes Gas und Schnee bilden, welche den Temperierkanal 14 durchströmen. Die Kühlwirkung erstreckt sich ebenfalls im Wesentlichen auf die Bereiche 19, 20.

Die von dem durch den Temperierkanal 14 strömenden Kohlendioxid 22 temperierten Bereiche 19, 20 sind in Figur 2 mit einer von links oben nach rechts unten verlaufenden Schraffierung gekennzeichnet.

Entsprechend temperiert durch den Temperierkanal 15 strömendes Kohlendioxid 23 die Bereiche 20, 21. Diese Bereiche 20, 21 sind in Figur 2 mit einer von rechts oben nach links unten verlaufenden Schraffierung versehen.

Der Bereich 20 wird von der Kühlwirkung beider Kohlendioxidströme 22, 23 erfasst. Entsprechend ist der Bereich 20 in Figur 2 durch eine gekreuzte Schraffierung gekennzeichnet.

Das durch den Temperierkanal 14 strömende Kohlendioxid 22 temperiert, das heißt kühlt bzw. erwärmt, den dem Kapillarrohr 17 benachbarten Bereich 20a stärker als den stromabwärts gelegenen Bereich 20b. Der Temperierkanal 15 wird dagegen so mit Kohlendioxid beschickt, dass das Kohlendioxid 23 den Temperierkanal 15 entgegengesetzt zu dem Kohlendioxidstrom 22 durchströmt. Der Kohlendioxidstrom 23 temperiert somit den Bereich 20b stärker als den aus Sicht des Kohlendioxidstroms 23 stromabwärts gelegenen Bereich 20a.

Durch die erfindungsgemäße Führung der Kohlendioxidströme 22, 23 in entgegengesetzten Richtungen kompensieren sich die ungleichmäßigen Kühlwirkungen der einzelnen Ströme 22, 23 so, dass der Bereich 20 insgesamt gleichmäßig temperiert wird.

Erfindungsgemäß wird ein bestimmter Bereich 20 des Formwerkzeugs durch mindestens zwei Ströme 22, 23 eines Temperiermediums, vorzugsweise Kohlendioxid, so temperiert, dass sich deren Heiz- bzw. Kühlwirkungen so ergänzen, dass eine gleichmäßige Temperierung des Bereichs 20 erreicht wird.

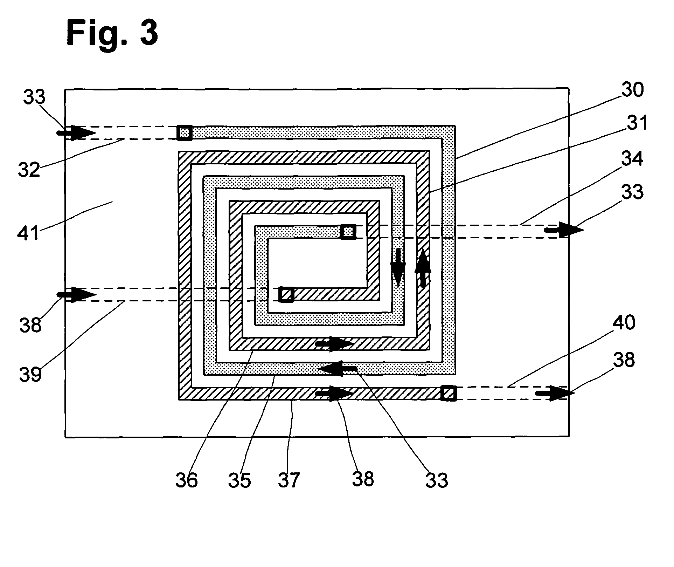

Figur 3 zeigt eine andere Anordnung zweier Temperierkanäle 30, 31. Die Temperierkanäle 30, 31 verlaufen in diesem Beispiel in Form von zwei ineinander gesetzte Spiralen.

Der Temperierkanal 30 wird über eine Zuleitung 32 mit dem Temperiermedium 33 gespeist. Der Temperierkanal 30 verläuft als rechtwinklige, ebene Spirale von außen nach innen. In ihrem Zentrum ist die Spirale 30 mit einem Auslass 34 verbunden, über die das Temperiermedium 33 entweichen kann bzw. abgezogen werden kann.

Der Temperierkanal 31 ist ebenfalls als rechtwinklige, ebene Spirale ausgeführt, welche in derselben Ebene wie der Temperierkanal 30 liegt. Ein Abschnitt 35 des Temperierkanals 31 weist von zwei parallelen und zueinander benachbarten Abschnitten 36, 37 des Temperierkanals 30 jeweils denselben Abstand auf. Der Temperierkanal 31 wird von einem Temperiermedium 38 entgegengesetzt zu dem Temperiermediumstrom 33 durchflossen. Die Zuführung des Temperiermediums 38 erfolgt über eine Zuleitung 39 zum Zentrum der Spirale 31 und der Auslass 40 aus dem Temperierkanal 31 befindet sich entsprechend am äußeren Ende der Spirale 31.

Die Bereiche zwischen den beiden Spiralen 30, 31 sind von beiden Spiralen / Temperierkanälen 30, 31 genauso weit entfernt und werden daher durch beide Temperierströme 33, 38 temperiert. Auf dem Weg durch den Temperierkanal 30 nähert sich die Temperatur des Temperierstroms 33 der des Formwerkzeugs 41 an, so dass die Temperierwirkung des Temperierstroms 33 beim Durchströmen der Spirale 30 von außen nach innen abnimmt. Andererseits wird der Temperierstrom 38 im Inneren der Spirale 31 zugeführt und strömt dann von innen nach außen. Die Temperierwirkung des Temperierstroms 38 ist dementsprechend innen stärker als außen. Das heißt, der vom Temperierstrom 33 weniger stark temperierte (gekühlte oder erwärmte) innere Bereich des Formwerkzeugs 41, d.h. das Zentrum der Spirale 30, wird durch den Temperierstrom 38 besonders stark temperiert. Für die Außenbereiche der Spiralen 30, 31 gilt genau das Umgekehrte. Insgesamt wird auf diese Weise eine sehr gleichmäßige Temperierung des Formwerkzeugs 41 erzielt.

Neben der in Figur 2 gezeigten Anordnung der Temperierkanäle 14, 15, bei der die Temperierkanäle 14, 15 das Formwerkzeug 16 geradlinig und parallel zueinander durchziehen, und der in Figur 3 gezeigten spiralförmigen Anordnung sind viele weitere vorteilhafte Anordnungen der Temperierkanäle denkbar. Beispielsweise können zwei im Wesentlichen kongruente, Helix-förmige Temperierkanäle versetzt zueinander angeordnet werden, so dass diese eine zweigängige Schraube bilden, wobei die beiden einzelnen Helices entgegengesetzt von Temperiermedium durchströmt werden. Entsprechend können auch Temperierkanäle eingesetzt werden, die zusammen mehrgängige Schrauben bilden.

Weiter vorstellbar sind wellen- oder mäanderförmige Temperierkanäle. Wie bereits erwähnt, kann hierbei ein Bereich des Formwerkzeugs auch von mehr als zwei Strömen eines Temperiermediums temperiert werden. Die einzelnen Temperierkanäle sind von Vorteil so ausgeführt, dass diese, zumindest in dem Abschnitt; in dem sie denselben Bereich temperieren sollen, im Wesentlichen kongruent sind. Es ist aber auch möglich, zwei oder mehr unterschiedlich ausgeführte Temperierkanäle in der erfindungsgemäßen Weise zu kombinieren, beispielsweise einen schraubenförmig verlaufenden Temperierkanal mit einem geradlinig verlaufenden Temperierkanal.

Die vorstehenden Ausführungen sind auch auf Anordnungen von mehr als zwei Temperierkanälen, mittels derer derselbe Bereich des Formwerkzeugs temperiert werden soll, übertragbar.

## Patentansprüche

1. Verfahren zum Temperieren eines Formwerkzeugs (16), wobei ein erster Strom (22) eines Temperiermediums durch einen ersten in dem Formwerkzeug (16) befindlichen Temperierkanal (14) geleitet wird, um einen ersten Bereich (19, 20) des Formwerkzeugs (16) zu temperieren, und wobei ein zweiter Strom (23) eines Temperiermediums durch einen zweiten in dem Formwerkzeug (16) befindlichen Temperierkanal (23) geleitet wird, um einen zweiten Bereich (20, 21) des Formwerkzeugs (16) zu temperieren, **dadurch gekennzeichnet, dass** der erste und der zweite Bereich (19, 20, 21) zumindest teilweise überlappen und dass die Strömungsrichtungen des an den überlappenden Bereich (20) angrenzenden ersten Stroms (22) und des an den überlappenden Bereich (20) angrenzenden zweiten Stroms (23) einen Winkel von mehr als 90° miteinander einschließen.

2. Verfahren nach Anspruch 1, **dadurch gekennzeichnet, dass** der erste Bereich (19, 20) durch die Teile des Formwerkzeugs (16) gebildet wird, die einen Abstand von weniger als 25 mm, bevorzugt weniger als 20 mm, besonders bevorzugt weniger als 10 mm, ganz besonders bevorzugt weniger als 5 mm, von dem ersten Temperierkanal (14) aufweisen, und der zweite Bereich (20, 21) durch die Teile des Formwerkzeugs (16) gebildet wird, die einen Abstand von weniger als 25 mm, bevorzugt weniger als 20 mm, besonders bevorzugt weniger als 10 mm, ganz besonders bevorzugt weniger als 5 mm, von dem zweiten Temperierkanal (15) aufweisen.

3. Verfahren nach einem der Ansprüche 1 oder 2, **dadurch gekennzeichnet, dass** der erste und der zweite Bereich (19, 20, 21) zu mehr als 50% überlappen.

4. Verfahren nach einem der Ansprüche 1 bis 3, **dadurch gekennzeichnet, dass** die Strömungsrichtungen des ersten Stroms (22) und des zweiten Stroms (23) in dem überlappenden Bereich (20) einen Winkel von 180° miteinander einschließen.

5. Verfahren nach einem der Ansprüche 1 bis 4, **dadurch gekennzeichnet, dass** gasförmiges oder flüssiges Kohlendioxid als Temperiermedium eingesetzt wird.

6. Verfahren nach einem der Ansprüche 1 bis 5, **dadurch gekennzeichnet, dass** das Formwerkzeug (16) auf eine Temperatur von 250 °C erwärmt wird.

7. Verfahren nach einem der Ansprüche 1 bis 5, **dadurch gekennzeichnet, dass** das Formwerkzeug (16) auf eine Temperatur zwischen 20 °C und 100 °C abgekühlt wird.

8. Verfahren nach einem der Ansprüche 1 bis 7, **dadurch gekennzeichnet, dass** das Formwerkzeug (16) abwechselnd abgekühlt und erwärmt wird.

9. Verfahren nach einem der Ansprüche 1 bis 8, **dadurch gekennzeichnet, dass** die Strömungsrichtungen des ersten (22) und des zweiten Stroms (23) umgekehrt werden.

10. Verfahren nach Anspruch 9, **dadurch gekennzeichnet, dass** beim Wechsel von Abkühlung des Formwerkzeugs (16) zu Erwärmung des Formwerkzeugs (16) die Strömungsrichtungen des ersten (22) und des zweiten Stroms (23) umgekehrt werden.

11. Verfahren nach einem der Ansprüche 1 bis 10, **dadurch gekennzeichnet, dass** das Formwerkzeug (16) zur Herstellung von Kunststoff- oder Metallteilen dient.

12. Formwerkzeug (16) mit einem ersten in dem Formwerkzeug (16) befindlichen Temperierkanal (14) zur Durchleitung eines Temperiermediums, um einen ersten Bereich (19, 20) des Formwerkzeugs (16) zu temperieren, wobei der erste Bereich (19, 20) durch die Teile des Formwerkzeugs (16) gebildet wird, die einen Abstand von weniger als 25 mm, bevorzugt weniger als 20 mm, besonders bevorzugt weniger als 10 mm, ganz besonders bevorzugt weniger als 5 mm, von dem ersten Temperierkanal (14) aufweisen, und mit einem zweiten in dem Formwerkzeug (16) befindlichen Temperierkanal (15) zur Durchleitung eines Temperiermediums, um einen zweiten Bereich (20, 21) des Formwerkzeugs (16) zu temperieren, wobei der zweite Bereich (20, 21) durch die Teile des Formwerkzeugs (16) gebildet wird, die einen Abstand von weniger als 25 mm, bevorzugt weniger als 20 mm, besonders bevorzugt weniger als 10 mm, ganz besonders bevorzugt weniger als 5 mm, von dem zweiten Temperierkanal (15) aufweisen, wobei der erste (14) und der zweite Temperierkanal (15) jeweils einen Einlass (17, 18) und einen Auslass aufweisen und wobei der Einlass (17, 18) jeweils mit einer Quelle für ein Temperiermedium verbunden ist, wobei die Verbindung von dem Einlass (17, 18) zu dem Auslass eines Temperierkanals (14, 15) jeweils die Strömungsrichtung (22, 23) durch den Temperierkanal (14, 15) bestimmt, **dadurch gekennzeichnet, dass** der erste (19, 20) und der zweite Bereich (20, 21) zumindest teilweise überlappen und dass die Strömungsrichtung (22) durch den an den überlappenden Bereich (20) angrenzenden ersten Temperierkanal (14) und die Strömungsrichtung (23) durch den an den überlappenden Bereich (20) angrenzenden zweiten Temperierkanal (15) einen Winkel von mehr als 90° miteinander einschließen.

13. Verfahren nach Anspruch 12, **dadurch gekennzeichnet, dass** die Temperierkanäle (14, 15) eine maximale Querschnittsweite zwischen 0,5 mm und 5 mm, vorzugsweise zwischen 0,7 mm und 2 mm, besitzen.

14. Verfahren nach einem der Ansprüche 12 oder 13, **dadurch gekennzeichnet, dass** die Temperierkanäle (14, 15) einen rechteckförmigen, runden oder elliptischen Querschnitt besitzen.

15. Verfahren nach einem der Ansprüche 12 bis 14, **dadurch gekennzeichnet, dass** die Temperierkanäle (14, 15) zumindest streckenweise in Form einer zweigängigen Schraube ausgeführt sind.
